# EUROPÄISCHE PATENTSCHRIFT

(11) **EP 2 809 545 B1**
(45) Veröffentlichungstag und Bekanntmachung des Hinweises auf die Patenterteilung: **10.05.2017**
(21) Anmeldenummer: 13702922.9
(22) Anmeldetag: 01.02.2013
(51) Int. Cl.: B60N 2/50, B60N 2/52

(54) **STEUERVENTIL FÜR EINE LUFTFEDER SOWIE FAHRZEUGSITZ MIT EINEM STEUERVENTIL**
CONTROL VALVE FOR A PNEUMATIC SPRING AND VEHICLE SEAT WITH A CONTROL VALVE
SOUPAPE DE COMMANDE POUR UN RESSORT PNEUMATIQUE ET SIÈGE DE VÉHICULE AVEC UN SOUPAPE DE COMMANDE

(30) Priorität: 02.02.2012 DE 102012001990
(43) Veröffentlichungstag der Anmeldung: 10.12.2014
(73) Patentinhaber: Isringhausen GmbH & Co. KG, 32657 Lemgo (DE)
(72) Erfinder: LIEKER, Reiner, 32699 Extertal (DE)
(74) Vertreter: DTS Patent- und Rechtsanwälte Schnekenbühl und Partner mbB
(86) Internationale Anmeldenummer: PCT/EP2013/000330
(87) Internationale Veröffentlichungsnummer: WO 2013/113519

(56) Entgegenhaltungen:
- WO-A1-00/58125
- DE-B3-102006 058 441

## Beschreibung

Die Erfindung befasst sich mit einem Steuerventil für eine Luftfeder sowie mit einem Fahrzeugsitz mit einem mechanischem Schwingsystem und einer Luftfeder, der ein Steuerventil aufweist.

Bei Nutzfahrzeugen sind Fahrzeugsitze bekannt, die mit einem schwingfähigen und höheneinstellbaren Scherenschwingsystem ausgestattet sind. Ein solches Scherenschwingsystem beinhaltet zumindest eine Luftfeder und ein Scherenlenkerpaar. Die Scherenlenker sind mittels einer gemeinsamen Scherenachse relativ zueinander schwenkbar angeordnet. Eine Steuereinrichtung dient zur Höheneinstellung sowie zur Höhenregulierung des Scherenschwingsystems. Sie umfasst ein Steuerventil zur Steuerung der Be- und Entlüftungsvorgänge der Luftfeder. Das Steuerventil wird von einem Mitnehmerzapfen, der auf am Steuerventil angeordnete Steuerhebel wirkt, betätigt. Die Höheneinstellung weist eine integrierte Höhenregulierung auf, die dafür sorgt, dass die Mittellage der Schwingbewegung, der nach Komfortgesichtspunkten individuell eingestellten Präferenzhöhe des Insassen entsprechend, beibehalten wird. Aus der EP 1 165 345 B1 ist ein solcher Fahrzeugsitz bekannt, der als Ventileinrichtung ein Steuerventil mit zwei Stößeln aufweist, die mittels eines an einem Steuerhebel angeordneten Magneten bedient werden. Der Steuerhebel kann dabei drei Positionen einnehmen: In seiner mittleren, neutralen Stellung wirkt der Magnet weder auf den einen, noch auf den anderen Stößel, so dass das Steuerventil geschlossen ist. Wird der Steuerhebel von einem Mitnehmerzapfen geschwenkt, der an einem der Scherenlenker angeordnet ist, so kann dies entweder in die eine oder in die andere Richtung erfolgen. In der einen Richtung steht der Magnet dann über dem einen Stößel in seiner Entlüftungsstellung, wobei der zugehörige Stößel bedient wird; in seiner anderen Stellung, der Belüftungsstellung, steht der Magnet oberhalb des anderen Stößels und bewirkt eine Belüftung der Luftfeder von einem Drucklufttank aus. Bei einer solchen Ventileinrichtung ist jedoch das Ansprechverhalten der Höhenregulierung hinsichtlich Feinfühligkeit und Geschwindigkeit sowie Feinstufigkeit der statischen Höheneinstellung nicht optimal

Ein gattungsgemässes Steuerventil ist aus der WO00/58125 bekannt.

Aufgabe der Erfindung ist es deshalb, ein Steuerventil für eine Luftfeder sowie einen Fahrzeugsitz mit einem mechanischem Schwingsystem und einem Steuerventil vorzustellen, die ein besseres Ansprechverhalten einer Höhenregulierung hinsichtlich Feinfühligkeit, Geschwindigkeit sowie Feinstufigkeit der statischen Höheneinstellung aufweisen.

Die Aufgabe wird durch ein Steuerventil mit den Merkmalen des Patentanspruchs 1 gelöst. Dadurch, dass das Steuerventil insgesamt drei Stößel aufweist, die einen Entlüftungskanal, einen Belüftungskanal bzw. einen Zusatzkanal zur Belüftung schließen oder öffnen können, kann bei zusätzlich zum Belüftungskanal geöffnetem Zusatzkanal eine schnellere Belüftung der Luftfeder erfolgen. Dadurch, dass erstes und zweites Steuermittel, die den Entlüftungsstößel bzw. den Belüftungsstößel bedienen, so zueinander angeordnet sind, dass sie nicht gleichzeitig von einem Bedienelement betätigt werden können, kann keine unerwünschte gleichzeitige Be- und Entlüftung der Luftfeder erfolgen. Die zeitlich nachfolgende Bedienung des Belüftungsstößels und des Zusatzstößels ermöglicht es, schon ein früheres Ansprechen zu erlauben, da der volle Kanalquerschnitt, der sich aus Belüftungskanal plus Zusatzkanal ergibt, nicht sofort bei der Belüftung vollständig geöffnet wird, sondern bei einer kleinen Relativbewegung des Bedienelements zum Gehäuse des Steuerventils zuerst nur der Belüftungskanal geöffnet wird und erst bei einer größeren Relativbewegung der Zusatzkanal zusätzlich geöffnet wird.

Eine vorteilhafte Weiterbildung der Erfindung sieht vor, dass die drei Steuermittel am Gehäuse angeordnet sind. Dadurch werden gegenüber Befestigungen an anderen Bestandteilen eines Fahrzeugsitzes die Toleranzen verringert, was zu einer exakteren Steuerung einer Höhenregulierung eines Fahrzeugsitzes führt.

Eine weitere vorteilhafte Weiterbildung der Erfindung sieht vor, dass die Steuermittel Steuerhebel sind, die jeweils um einen am Gehäuse ausgebildeten Schwenkzapfen rotieren. Im Gegensatz zu Schlepphebeln oder Kurvenscheiben, die im Stand der Technik, beispielsweise der DE 10 2006 017 774 A1 oder DE 10 2008 013 794 B3, verwendet werden, dient auch dies zur Verringerung der Toleranzen und somit einer exakteren Steuerung der Höhenregulierung.

Eine weitere vorteilhafte Weiterbildung der Erfindung sieht vor, dass der Entlüftungsstößel und/oder der Belüftungsstößel und/oder der Zusatzstößel einteilig ausgebildet sind. Auch dies dient wieder zur Verringerung der Toleranzen und darüber hinaus zur Vermeidung eines Leerhubs. Im Ergebnis erhält man also auch hier wieder eine exaktere Steuerung der Höhenregulierung.

Eine weitere vorteilhafte Weiterbildung der Erfindung sieht vor, dass jeder Stößel von jeweils einer zugeordneten Feder in seine Schließstellung gedrückt wird. Dadurch wird durch einfache Mittel in der Neutralstellung jeder Kanal geschlossen gehalten und eine Öffnung des jeweiligen Kanals erfolgt immer nur gegen die Federkraft bei Bedienung des jeweiligen Steuerhebels mittels des Bedienelements.

Eine weitere vorteilhafte Weiterbildung der Erfindung sieht vor, dass der Entlüftungsstößel, der Belüftungsstößel und der Zusatzstößel jeweils einen Ventilsitz aufweisen, wobei mindestens einer der Ventilsitze um den zugehörigen Stößel aus einem Kunststoff gespritzt ist. Ein solcher umspritzter Stößel ist zum einen einfach herzustellen und zum anderen unterliegt er weniger Verschleiß als die anderen bekannten Ausführungsformen.

Eine weitere vorteilhafte Weiterbildung der Erfindung sieht vor, dass mindestens einem der Stößel ein Dichtring innerhalb einer Führungsvorrichtung zugeordnet ist, der ortsfest im Gehäuse angeordnet ist und in dem sich der zugeordnete Stößel bewegt. Durch eine solche ortsfeste Anordnung des Dichtrings im Gehäuse anstatt am Stößel wird der Verschleiß des Dichtrings vermindert. Dadurch ist es möglich, Ventile herzustellen, die über ihre gesamte Lebenszeit nicht gewartet werden müssen. Durch die ortsfeste Anordnung der Dichtringe im Gehäuse wird darüber hinaus vermieden, dass ein Saugeffekt auftritt.

Eine weitere vorteilhafte Weiterbildung der Erfindung sieht vor, dass mindestens einer der Stößel eine zugeordnete Führungsvorrichtung im Gehäuse aufweist, die ein Schmiermittelreservoir hat. Durch das Schmiermittelreservoir wird zum einen verhindert, dass Schmutz in das Steuerventil gelangt und somit zu einem Verschleiß bzw. einer Fehlfunktion führen kann. Zum anderen wird dadurch erreicht, dass über die gesamte Lebensdauer des Ventils keine zusätzliche Schmierung erfolgen muss. Ein solches Ventil ist somit wartungsfrei.

Die Aufgabe wird auch durch einen Fahrzeugsitz mit den Merkmalen des Patentanspruchs 9 gelöst. Da ein solcher Fahrzeugsitz das erfindungsgemäße Steuerventil enthält, gelten die vorstehenden Ausführungen zu dem Steuerventil mit den jeweiligen Ausgestaltungen und den sich daraus ergebenden Vorteilen auch für den erfindungsgemäßen Fahrzeugsitz. Die vier definierten Stellungen des Bedienelements zum Steuerventil, nämlich die Neutralstellung, die Entlüftungsstellung, die Belüftungsstellung und die Zusatzstellung entsprechen dabei den oben zum Steuerventil angegebenen Zustände, in denen sich das Steuerventil befindet, nämlich im geschlossenen Zustand, im entlüfteten Zustand, im belüfteten Zustand oder im belüfteten Zustand mit Zusatzkanal.

Eine vorteilhafte Weiterbildung der Erfindung sieht vor, dass das Steuerventil auf einer Achse, drehbar zu dieser, angeordnet ist, die zwei Scherenlenker des mechanischen Schwingsystems drehbar miteinander verbindet und das Bedienelement an einem der Scherenlenker ortsfest angeordnet ist. Dadurch ist es möglich, das Steuerventil in einfacher Art und Weise immer in derselben Relativposition zum Bedienelement durch Mitdrehen bei einer Änderung der Sitzhöhe mit dem Scherenlenker, an dem das Bedienelement angebracht ist, zu halten. Dies führt zu einer sehr genauen und feingliedrigen Möglichkeit, die Steuerung der Höhenregulierung durch eine Änderung der relativen Lage des Steuerventils zum Bedienelement vorzunehmen, indem das Steuerventil aktiv mehr oder weniger weit gedreht wird als der Scherenlenker.

Eine weitere vorteilhafte Weiterbildung der Erfindung sieht vor, dass das Bedienelement ein Mitnehmerzapfen ist, der in seiner Neutralstellung unter Vorspannung gegen eine Auflagefläche des Gehäuses des Steuerventils gedrückt wird. Dadurch werden Toleranzen im Hinblick auf die Position des Bedienelements zum Steuerventil und der am Gehäuse ausgebildeten Auflagefläche ausgeglichen, die sich bei einer Schwenkbewegung des Scherenlenkers ergeben können Dadurch wird also immer ein Anliegen des Bedienelements am Steuerventil gewährleistet.

Eine weitere vorteilhafte Weiterbildung der Erfindung sieht vor, dass der Winkel bezogen auf die Achse zwischen Entlüftungsstellung und Neutralstellung des Bedienelements höchstens 5°, bevorzugt 1,2°, beträgt und/oder der Winkel zwischen Belüftungsstellung und Neutralstellung höchstens 4°, bevorzugt 1,2°, beträgt und/oder der Winkel zwischen Zusatzstellung und Neutralstellung höchstens 7°, bevorzugt 5°, beträgt. Dadurch ist es möglich, dass die Höhenregulierung schon bei sehr kleinen Relativbewegungen zwischen Bedienelement und Steuerventil einsetzt, anders als dies beim Stand der Technik der Fall war, wo regelmäßig ein Winkel von ca. 7° - auch bedingt durch die größeren Toleranzen bei diesen Steuerventilen - nötig war, um die Regulierung einsetzen zu lassen.

Eine weitere vorteilhafte Weiterbildung der Erfindung sieht vor, dass das Bedienelement mit einem Seilzug zwischen seinen Positionen verstellbar ist und es zur Festlegung der statischen Höhe des Fahrzeugsitzes verwendet wird. Dies stellt eine sehr einfache und robuste Art dar, die benötigten Einstellungen vorzunehmen.

Weitere Vorteile und Einzelheiten der Erfindung werden anhand des in den Figuren dargestellten Ausführungsbeispiels im Folgenden beschrieben. Es zeigen:
- Figur 1: ein Scherenlenkersystem mit erfindungsgemäßem Steuerventil,
- Figur 2: eine vergrößerte, perspektivische Darstellung des Steuerventils aus Figur 1,
- Figur 3: eine vergrößerte Seitenansicht des erfindungsgemäßen Steuerventils aus derselben Richtung wie in Figur 1 dargestellt,
- Figur 4: einen Längsschnitt durch ein erfindungsgemäßes Steuerventil in einer Ebene parallel zu Figur 3,
- Figur 5: eine Ansicht des Steuerventils gemäß Figur 3 mit Bedienelement in seiner Neutralstellung,
- Figur 6: eine Ansicht wie Figur 5, jedoch mit Bedienelement in seiner Entlüftungsstellung,
- Figur 7: eine Darstellung wie Figur 5, jedoch mit dem Bedienelement in seiner Belüftungsstellung, und
- Figur 8: eine Darstellung wie in Figur 7, jedoch mit dem Bedienelement in seiner Zusatzstellung.

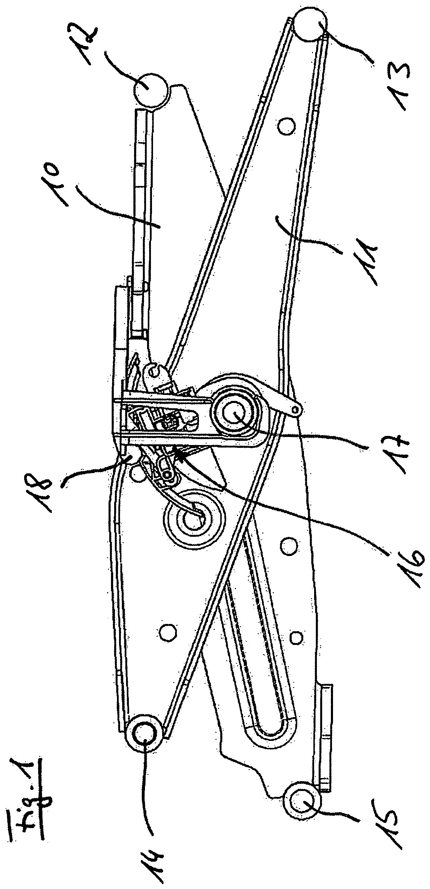

In Figur 1 ist eine Seitenansicht eines Teils eines Schwingsystems eines luftgefederten Fahrzeugsitzes dargestellt. Der prinzipielle Aufbau eines solchen Schwingsystems, das darüber hinaus eine Höheneinstellung sowie eine Höhenregulierung der Sitzfläche eines Fahrzeugsitzes aufweist, ist prinzipiell bekannt. Es wird im Folgenden deshalb nur auf die im Hinblick auf die Ausgestaltung der Erfindung wesentlichen Bestandteile eingegangen.

Figur 1 zeigt eines der beiden parallel zueinander angeordneten Scherenlenkerpaare mit einem inneren Scherenlenker 10 und einem äußeren Scherenlenker 11. Die beiden Scherenlenker 10, 11 sind über eine Achse 17 drehbar miteinander verbunden. An ihrem in Figur 1 dargestellten rechten Enden weisen sie jeweils ein Festlager 12, 13 auf, die am Oberrahmen (nicht dargestellt) bzw. am Unterrahmen (ebenfalls nicht dargestellt) örtlich festgelegt sind. An dem jeweiligen linken Enden der Scherenlenker 10, 11 ist jeweils ein horizontales Verschiebelager 14, 15 ausgebildet. Mittels eines solchen Scherenlenkersystems, das auf der anderen Seite eines Fahrzeugsitzes (nicht dargestellt) in prinzipiell gleicher Ausgestaltung noch einmal vorgesehen ist, ist eine Verstellung der Höhe des Oberrahmens zum Unterrahmen und somit der Sitzhöhe möglich. Zwischen Oberrahmen und Unterrahmen ist eine Luftfeder (nicht gezeigt) sowie regelmäßig auch ein Stoßdämpfer (ebenfalls nicht gezeigt) angeordnet.

Die (statische) Sitzhöheneinstellung sowie die anregungsabhängige Höhenregulierung wird dadurch erreicht, dass der Luftfeder entweder Luft entzogen oder dieser Luft von einem Vorratsbehälter (nicht gezeigt) zugeführt wird. Dabei hängen die der Luftfeder entnommenen bzw. zugeführten Luftmengen unter anderem auch vom Gewicht des Insassen auf dem Fahrzeugsitz ab. Die Steuerung, wann und wie viel Luft der Luftfeder entnommen wird (Entlüftung) bzw. der Luftfeder zugeführt wird (Belüftung) erfolgt mittels eines Steuerventils 16. Die prinzipielle Arbeitsweise eines Steuerventils 16 ist bekannt, so dass im Folgenden nur auf die erfindungswesentlichen, gegenüber dem Stand der Technik geänderten Merkmale eingegangen werden muss.

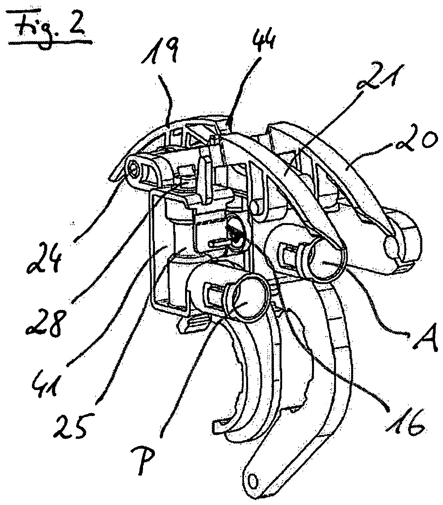

Ein erfindungsgemäßes Steuerventil 16 - das detailliert in den Figuren 2-8 dargestellt und weiter unten noch ausführlich beschrieben wird - ist drehbar auf der Achse 17 angeordnet. Die weiter unten noch genauer ausgeführte Steuerung des Steuerventils 16 erfolgt über eine Relativbewegung eines Bedienelements 18 - im folgenden wird dies gemäß dem in den Figuren dargestellten Ausführungsbeispiel als Mitnehmerzapfen 18 bezeichnet, wobei in anderen Ausführungsbeispielen auch andere Ausgestaltungen möglich sind - zum Steuerventil 16. Der Mitnehmerzapfen 18 ist fest mit dem äußeren Scherenlenker 11 verbunden und steht von diesem im wesentlichen parallel zur Achse 17 in die Richtung hervor, in der auch das Steuerventil 16 auf der Achse 17 angeordnet ist.

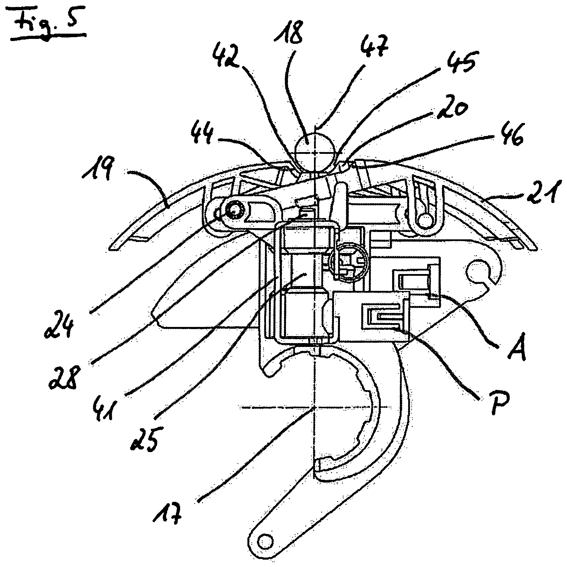

Die Sitzhöhe wird im nicht angeregten Zustand des Schwingsystems in Abhängigkeit vom Gewicht des Insassen regelmäßig dadurch eingestellt, dass mittels eines Bowdenzugs (nicht dargestellt) das Steuerventil 16 um die Achse 17 gedreht wird und dadurch aufgrund der Relativbewegung zum Mitnehmerzapfen 18 eine unten noch näher beschriebene Be- oder Entlüftung der Luftfeder erreicht wird, bis die vom Insassen gewünschte Sitzhöhe eingestellt ist. Wenn dieser Zustand erreicht ist, wird das Steuerventil 16 relativ zum Mitnehmerzapfen 18 so positioniert, dass sich dieser in seiner in Figur 5 dargestellten Neutralstellung 47 befindet und das Steuerventil 16 geschlossen ist.

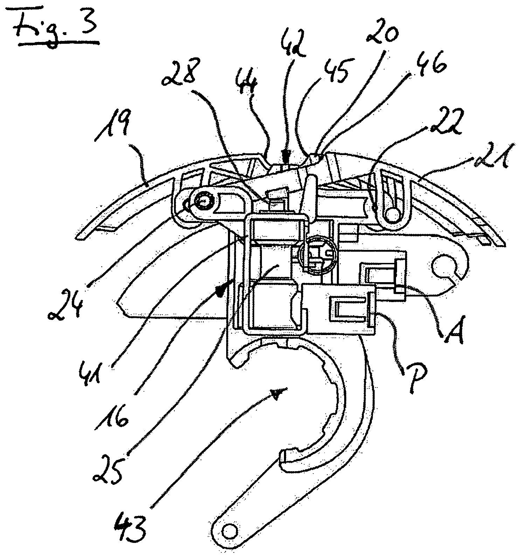

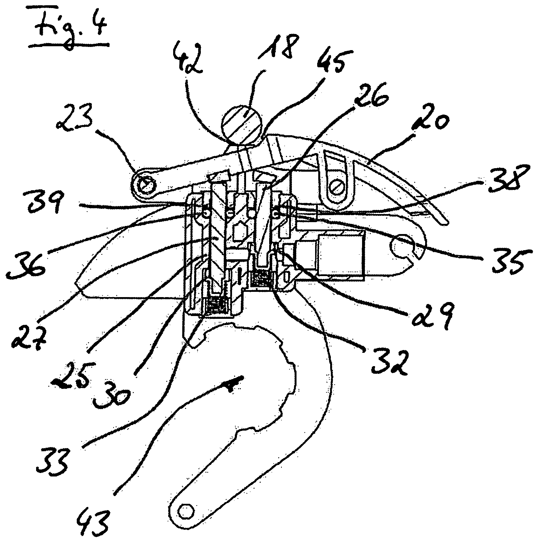

Im Folgenden wird der Aufbau des erfindungsgemäßen Steuerventils 16 anhand einer Kombination der Figuren 2 und 3 ohne den Mitnehmerzapfen 18 - dieser ist in den Figuren 4-8 dargestellt - beschrieben. Diese beiden Figuren geben lediglich zwei unterschiedliche Ansichtsrichtungen wieder. In den Figuren 2-8 ist das Steuerventil 16 gegenüber seiner Darstellung in Figur 1 so weit im Uhrzeigersinn gedreht, dass seine Auflagefläche 42 oben liegt und horizontal verläuft.

Das Steuerventil 16 weist drei im Wesentlichen vertikal in den Figuren 2 und 3 verlaufende Stößel 26, 27, 28 auf. In den Figuren 2 und 3 ist aufgrund der Blickrichtungen nur das aus der Außenwand 25 herausragende obere Ende eines der Stößel, nämlich des Zusatzstößels 28, zu sehen. Die beiden anderen Stößel, nämlich der Entlüftungsstößel 26 und der Belüftungsstößel 27 sind in der Schnittzeichnung der Figur 4 zu erkennen.

Jeder der Stößel 26, 27, 28 wird von einem jeweils zugeordneten Steuerhebel 19, 20, 21 betätigt. Anstatt der konkreten Ausgestaltung des Ausführungsbeispiels als Steuerhebel 19, 20, 21 können diese allgemein als Steuermittel 19, 20, 21 zu bezeichnenden Teile auch anders ausgebildet sein, bspw. als Wippe, Schieber oder Rolle.

Jeder der Steuerhebel 19, 20, 21 ist direkt mit dem Gehäuse 41, das auch die Außenwand 25 jedes einzelnen Stößels 26, 27, 28 als Bestandteil umfasst, verbunden und kann um einen jeweils horizontal verlaufende Schwenkzapfen 22, 23, 24 nach unten bewegt werden. Bei einer Bewegung eines Steuerhebels 19, 20, 21 nach unten, wird der jeweils zugeordnete Stößel 26, 27, 28 nach unten gedrückt. Bei den drei Steuerhebeln 19, 20, 21 handelt es sich um einen in Figur 3 nach links weisenden Entlüftungshebel 19 und zwei nach rechts weisende Steuerhebel 20, 21, die für eine Belüftung der Luftfeder zuständig sind. Dabei ist der in Figur 3 weiter hinten befindliche Belüftungshebel 20 gegenüber dem Zusatzhebel 21 leicht nach links versetzt.

Jeder der Steuerhebel 19, 20, 21 weist jeweils eine steil, schräg nach oben verlaufende Auslöseschräge 44, 45, 46 auf. Zwischen der Auslöseschräge 44 des Entlüftungshebels 19 und der Auslöseschräge 45 des Belüftungshebels 20 ist eine horizontal verlaufende Auflagefläche 42 ausgebildet. Bei den beiden für die Belüftung der Luftfeder zuständigen Steuerhebeln 20, 21 ist dabei die Auslöseschräge 45 des Belüftungshebels 20 näher bei der Auflagefläche 42 angeordnet als die Auslöseschräge 46 des Zusatzhebels 21.

Im unteren Bereich der Außenwand 25 des Zusatzstößels 28 ist ein Anschluss P für eine Druckluftleitung (nicht dargestellt), die von einem Druckluftversorgungstank (nicht dargestellt) kommt, vorhanden. Im unteren Bereich der Außenwand 25 des Entlüftungsstößels 26 ist ein Anschluss A für eine Druckluftleitung (nicht dargestellt) vorhanden zur Luftfeder vorhanden.

Unterhalb der Außenwand 25 des Zusatzstößels 28 ist eine Achsaufnahme 43 ausgebildet, die dazu dient, das erfindungsgemäße Steuerventil 16 auf die Achse 17 (siehe Figur 1 sowie Figuren 5-8) aufzuklipsen, wobei das gesamte Steuerventil 16 jedoch noch rotierbar zur Achse 17 ist.

In Figur 4 ist ein Längsschnitt in einer Ebene, die parallel zu der in Figur 3 dargestellten Bildebene ist, gezeigt. Der Schnitt läuft zwischen dem Belüftungshebel 20 und dem Entlüftungshebel 19, so dass nur der Belüftungshebel 20 dargestellt ist.

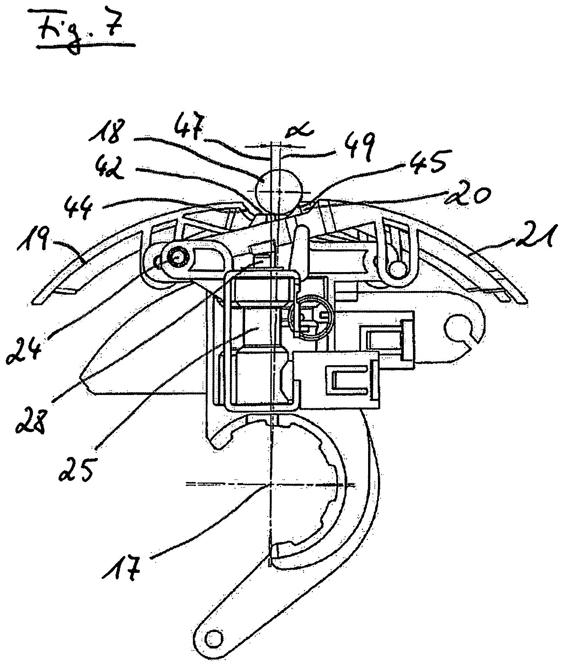

Der Belüftungshebel 20 ist an seinem linken Ende über einen Schwenkzapfen 23 mit dem Gehäuse 41 des Steuerventils 16 verbunden und kann um diesen Schwenkzapfen 23 im Uhrzeigersinn nach unten rotiert werden. Falls der Belüftungshebel 20 nach unten gedrückt wird, drückt dieser mittels einer geeigneten Fläche auf das obere Ende des Belüftungsstößels 27, der gegen eine am unteren Ende der Außenwand 25 angeordnete Schließfeder 33 nach unten gedrückt wird, so dass ein in seinem unteren Endbereich befindlicher Ventilsitz 30 nach unten bewegt wird. Dies ist der Fall, wenn der Mitnehmerzapfens 18 die unten zur Figur 7 noch näher ausgeführte Stellung in Bezug auf die Auslöseschräge 45 des Belüftungshebels 20 nach rechts überschreitet. Dabei wird ein Kanal geöffnet, der die am Anschluss P anstehende und von einem Vorratsbehälter kommende Druckluft über eine Druckluftleitung am Anschluss A in die Luftfeder einströmen lässt, so dass die Luftfeder belüftet wird.

Der Belüftungsstößel 27 ist wie die beiden anderen Stößel 26, 28 einteilig aus einem Stahl gefertigt. Alternativ könnten die Stößel 26, 27, 28 auch aus jedem Material bestehen, das bei der Materialpaarung gute Verschleißeigenschaften auf weist wie bspw. Polyoxymethylen (POM), Aluminium oder Messing. Die Ventilsitze 29, 30, 31 sind dabei aus einem Kunststoff, wie bspw. aus einem Elastomer, insbesondere aus einem thermoplastischen Elastomer und direkt am unteren Ende des jeweiligen Stößels 26, 27, 28 umspritzt alternativ auch montiert. Dadurch erhält man einfach herzustellende Absperrkörper, die darüber hinaus noch weniger Spiel im Gegensatz zu den im Stand der Technik bekannten mehrteiligen Stößeln aufweisen. Nicht abschließend aufgezählt gehören zu den verwendbaren Elastomeren Polyurethan (PUR), Fluor-Kautschuk (FPM). Nitril-Butadien-Kautschuk (NBR), hydrierter Nitril-Kautschuk (HNBR) und Ethylen-Propylen-Dien-Kautschuk (EPDM).

Im oberen Bereich ist ein, den Belüftungsstößel 27 umschließender Dichtring 26 ortsfest im Gehäuse 41 angeordnet. Es handelt sich hierbei um einen O-Ring aus einem Elastomer. Oberhalb dieses Dichtrings 26 ist ein Schmiermittelreservoir 39 in Form einer Fetttasche, vorhanden. Dadurch wird bewirkt, dass kein Schmutz in das Ventil gelangen kann.

Der darüber hinaus in Figur 4 dargestellte Teil, der den Entlüftungsstößel 26 innerhalb des Gehäuses 41 aufnimmt, ist im Wesentlichen von der Funktionalität gleich aufgebaut: Er enthält eine Schließfeder 32, einen einstückigen Entlüftungsstößel 26, der im unteren Bereich einen umspritzten Ventilsitz 29 - alternativ kann der Ventilsitz 29 auch montiert sein - und im oberen Bereich der Führung einen den Entlüftungsstößel 26 umschließenden Dichtring 35 in Form eines O-Rings aufweist. Darüber hinaus ist ein Schmiermittelreservoir 38 vorhanden. Von dem den Entlüftungsstößel 26 bedienenden Entlüftungshebel 19 ist nur die Fläche im Schnitt erkennbar, die den Entlüftungsstößel 26 bei Betätigung nach unten drückt.

Aufgrund der Einteiligkeit der Stößel 26, 27, 28 werden geringere Toleranzen erreicht und ein Leerhub vermieden. Geringere Toleranzen werden auch dadurch erreicht, dass die Steuerhebel 19, 20, 21 über die Schwenkzapfen 22, 23, 24 direkt am Gehäuse 41 des Steuerventils 16 angeordnet sind. Die Ventilsitze 29, 30, 31 weisen einen kleinen Querschnitt auf, um die Betätigungskräfte niedrig zu halten. Da die Dichtringe 35, 36, 37 ortsfest im Gehäuse 41 und nicht beweglich dazu an den Stößeln 26, 27, 28 angeordnet sind, wird ein Saugeffekt vermieden. Die Stößel 26, 27, 28 weisen in dem die Dichtringe 35, 36, 37 berührenden Oberflächen eine sehr glatte Oberfläche auf, so dass nur äußerst geringe Reibungskräfte entstehen.

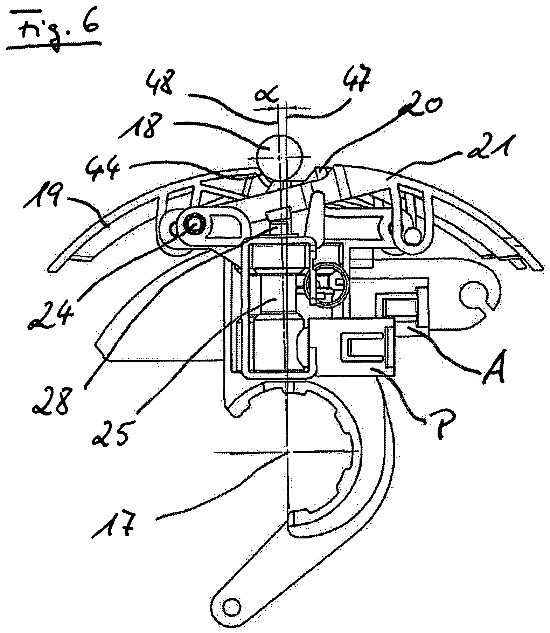

Bei einer Bewegung des Entlüftungsstößels 26 nach unten durch Betätigung des Entlüftungshebels 19 (siehe Figur 6) wird ein Kanal zur Atmosphäre geöffnet. Da dieser Teil des Steuerventils 16 über den Anschluss A mit der Luftfeder verbunden ist, entweicht bei gedrücktem Entlüftungshebel 19 Luft aus der Luftfeder in die Atmosphäre.

Der am äußeren Scherenlenker 11 (siehe Figur 1) fest angeordnete Mitnehmerzapfen 18 liegt gegen eine Vorspannung an der Auflagefläche 42 des Gehäuses 41 des Steuerventils 16 an. Dadurch können Toleranzen ausgeglichen werden, die bei einer Änderung der Winkel der beiden Scherenlenker 10, 11 zueinander - bei Änderung der Sitzhöhe - zwischen dem Steuerventil 16, das auf die Achse 17 aufgeklipst ist, und dem ortsfest am Scherenlenker 11 der Außenschere ausgebildeten Mitnehmerzapfen 18 auftreten können.

In den Figuren 5-8 wird das Steuerventil 16 in vier verschiedenen Zuständen dargestellt, die im Folgenden einzeln beschrieben werden.

Figur 5 zeigt das Steuerventil 16 in seiner geschlossenen Stellung. Hierbei befindet sich der Mitnehmerzapfen 18 in Kontakt (wie oben ausgeführt gegen eine Vorspannung) mit der Auflagefläche 42 am Gehäuse 41 des Steuerventils 16. Somit ist keiner der Steuerhebel 19, 20, 21 gedrückt und sämtliche Kanäle des Steuerventils 16 sind geschlossen, so dass weder Druckluft vom Versorgungstank in die Luftfeder gelangen, noch aus dieser Druckluft in die Atmosphäre entweichen kann. Der Mitnehmerzapfen 18 befindet sich somit in seiner Neutralstellung 47, die dadurch definiert wird, dass die in der Figur dargestellte vertikal verlaufende Achse, die durch den Mittelpunkt des Mitnehmerzapfens 18 und den Mittelpunkt der Achse 17 verläuft, mittig über der Auflagefläche 42 und mit ungefähr gleichem Abstand zu dem Auslöseschrägen 44, 45 des Entlüftungshebels 19 bzw. des Belüftungshebels 20 angeordnet ist.

In Figur 6 ist das Steuerventil 16 in einer Stellung dargestellt, ab der eine Entlüftung der Luftfeder erfolgt. Der Mitnehmerzapfen 18 ist gegenüber der Neutralstellung 47 in Figur 5 nach links verschoben worden. Er schlägt mit seiner linken unteren Fläche an der Auslöseschräge 44 des Entlüftungshebels 19 an. Seine Entlüftungsstellung 48 wird durch den Mittelpunkt des Mitnehmerzapfens 18 in dieser Stellung und der Achse 17 definiert. Zwischen der Neutralstellung 47 und der Entlüftungsstellung 48 ist somit ein Winkel α gegeben. Im erfindungsgemäßen Steuerventil 16 beträgt dieser nur 1,2°. Dies bedeutet, dass bei einer weiteren Bewegung des Mitnehmerzapfens 18 relativ zum Steuerventil 16 nach links der Entlüftungshebel 19 nach unten und dadurch auch der Entlüftungsstößel 26 (siehe Figur 4) nach unten gedrückt wird, so dass die oben schon beschriebene Entlüftung über den Anschluss A der Luftfeder in die Atmosphäre erfolgt. Im Gegensatz zu den aus dem Stand der Technik bekannten Steuerventilen ist ein signifikanter Unterschied für den Beginn der Entlüftung gegeben, der beim Stand der Technik bei ungefähr 7° erst einsetzt. Damit wird ein schnelleres Ansprechen und damit eine feinere Rasterung und höhere Schaltgenauigkeit sowie eine signifikant höhere Schalthäufigkeit erreicht.

Dies gilt entsprechend für eine Bewegung des Mitnehmerzapfens 18 in die andere Richtung, also nach rechts, wie dies in Figur 7 dargestellt ist. Hierbei liegt der Mitnehmerzapfen 18 mit seiner unteren rechten Fläche an der Auslöseschräge 45 des Belüftungshebels 20 an. Der Winkel α zwischen der Neutralstellung 47 und der Belüftungsstellung 49, die analog definiert wird wie die Entlüftungsstellung 48 gemäß Figur 6, beträgt ebenfalls nur 1,2° im Vergleich zu dem Stand der Technik mit 7° für den Beginn einer Belüftung der Luftfeder. Wird der Mitnehmerzapfen 18 weiter nach rechts über die in Figur 7 dargestellte Belüftungsstellung 49 bewegt, drückt dieser den Belüftungshebel 20 nach unten, so dass der Belüftungsstößel 27 (siehe Figur 4) nach unten gedrückt wird. Dadurch wird die oben schon beschriebene Belüftung der Luftfeder über die am Anschluss P anstehende Druckluft eines Versorgungstanks über einen innerhalb des Steuerventils 16 geöffneten Belüftungskanal und den Anschluss A zur Luftfeder freigegeben.

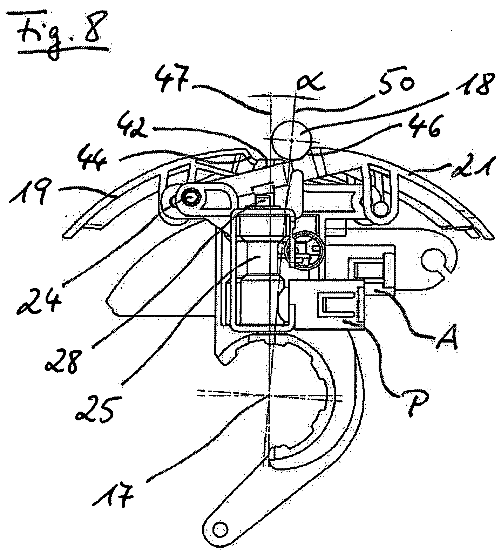

Wenn der Mitnehmerzapfen 18 relativ zum Steuerventil 16 so weit nach rechts bewegt wurde, dass die in Figur 8 dargestellte Position erreicht ist, schlägt der Mitnehmerzapfen 18 mit seiner rechten unteren Fläche an der Auslöseschräge 46 des Zusatzhebels 21 an. Dabei drückt er weiterhin den Belüftungshebel 20 vollständig nach unten, so dass der Belüftungskanal - wie oben zu Figur 7 beschrieben - weiterhin voll geöffnet ist. Diese in Figur 8 dargestellte Position des Mitnehmerzapfens 18 definiert seine Zusatzstellung 50. Im erfindungsgemäßen Steuerventil 16 ist der Winkel α zwischen der Neutralstellung 47 und der Zusatzstellung 50 bei 5° erreicht. Auch hier wird die Definition der Zusatzstellung 50 wie diejenige der Entlüftungsstellung 48 vorgenommen.

Wird der Mitnehmerzapfen 18 noch weiter nach rechts bewegt, drückt er den Zusatzhebel 21 nach unten, so dass der Zusatzstößel 28 zusätzlich zu dem noch in seiner unteren Stellung befindlichen Entlüftungshebel 27 nach unten gedrückt wird. Dies bewirkt, dass ein Zusatzkanal freigegeben wird, der einen breiteren Querschnitt der nunmehr geöffneten Druckluftversorgung zur Luftfeder nach sich zieht. Damit erfolgt eine schnellere Belüftung der Luftfeder, wodurch die Sitzfläche schneller nach oben bewegt wird. Dies ist bei einer starken Anregung vorteilhaft, da dann die Zeit zur Erreichung der vom Insassen im nicht angeregten Zustand vorgewählten Sitzhöhe schneller erreicht werden kann.

Insgesamt wird durch die Erfindung ein schnelleres Ansprechen und damit eine feinere Rasterung und höhere Schaltgenauigkeit samt einhergehender höherer Verstellgeschwindigkeit bei großen Verstellwegen bzw. großen Schwinghüben sowie eine signifikant höhere Schalthäufigkeit erreicht.

Zwar wird meist eine mechanische Einstellvorrichtung, beispielsweise der vorher beschriebene Bowdenzug, für die Einstellung der Sitzhöhe im nicht angeregten Zustand verwendet. Das erfindungsgemäße Steuerventil 16 und der erfindungsgemäße Fahrzeugsitz können genauso gut mit einer Höheneinstellung mittels eines Elektromotors oder anderer Ansteuerantriebe, wie beispielsweise hydraulischen oder pneumatischen Zylindern bedient werden. Die Festlegung der statischen Höhe kann somit unter Zuhilfenahme von elektrischer, pneumatischer oder hydraulischer Hilfsenergie eines geeigneten Aktuators eingestellt werden.

### Bezugszeichenliste

- 10, 11: Scherenlenker
- 12, 13: Festlager
- 14, 15: horizontales Verschiebelager
- 16: Steuerventil
- 17: Achse
- 18: Bedienelement, Mitnehmerzapfen
- 19: erstes Steuermittel, Entlüftungshebel
- 20: zweites Steuermittel, Belüftungshebel
- 21: drittes Steuermittel, Zusatzhebel
- 22, 23, 24: Schwenkzapfen
- 25: Außenwand
- 26: Entlüftungsstößel
- 27: Belüftungsstößel
- 28: Zusatzstößel
- 29, 30, 31: Ventilsitz
- 32, 33, 34: Schließfeder
- 35, 36, 37: Dichtring
- 38, 39, 40: Schmiermittelreservoir
- 41: Gehäuse
- 42: Auflagefläche
- 43: Achsaufnahme
- 44, 45, 46: Auslöseschräge
- 47: Neutralstellung
- 48: Entlüftungsstellung
- 49: Belüftungsstellung
- 50: Zusatzstellung
- A: Anschluss für Luftfeder, erster Luftanschluss
- P: Anschluss für Druckluft, zweiter Luftanschluss
- α: Winkel zwischen Neutral- und aktueller Stellung

## Patentansprüche

1. Steuerventil (16) für eine Luftfeder mit einem Gehäuse (41),
mit einem Entlüftungskanal, der einen Entlüftungsstößel (26) zum Öffnen oder Schließen des Entlüftungskanals aufweist, der mit einem ersten Steuermittel (19) zusammenwirkt,
mit einem Belüftungskanal, der einen Belüftungsstößel (27) zum Öffnen oder Schließen des Belüftungskanals aufweist, der mit einem zweiten Steuermittel (20) zusammenwirkt, **gekennzeichnet durch** einen Zusatzkanal, der einen Zusatzstößel (28) zum Öffnen oder Schließen des Zusatzkanals aufweist, der mit einem dritten Steuermittel (21) zusammenwirkt,
wobei sich an den Entlüftungskanal ein erster Luftanschluss (A) und an den Belüftungskanal zusammen mit dem Zusatzkanal ein zweiter Luftanschluss (P) anschließt, wobei erstes Steuermittel (19) und zweites Steuermittel (20) so zueinander angeordnet sind, dass sie nicht gleichzeitig von einem Bedienelement (18) betätigt werden können,
und wobei das zweite Steuermittel (20) und das dritte Steuermittel (21) so zueinander angeordnet sind, dass der Zusatzkanal nur geöffnet werden kann, wenn der Belüftungskanal geöffnet ist.

2. Steuerventil (16) nach Patentanspruch 1, **dadurch gekennzeichnet, dass** das erste, das zweite und das dritte Steuermittel (19, 20, 21) am Gehäuse (41) angeordnet sind.

3. Steuerventil (16) nach Patentanspruch 2, **dadurch gekennzeichnet, dass** das erste, das zweite und das dritte Steuermittel (19, 20, 21) Steuerhebel sind, die jeweils um einen am Gehäuse (41) ausgebildeten Schwenkzapfen (22, 23, 24) rotieren.

4. Steuerventil (16) nach einem der vorstehenden Patentansprüche, **dadurch gekennzeichnet, dass** der Entlüftungsstößel (26) und/oder der Belüftungsstößel (27) und/oder der Zusatzstößel (28) einteilig ausgebildet sind.

5. Steuerventil (16) nach einem der vorstehenden Ansprüche, **dadurch gekennzeichnet, dass** jeder Stößel (26, 27, 28) von jeweils einer zugeordneten Feder (32, 33, 34) in seine Schließstellung gedrückt wird.

6. Steuerventil (16) nach einem der vorstehenden Ansprüche, **dadurch gekennzeichnet, dass** der Entlüftungsstößel (26), der Belüftungsstößel (27) und der Zusatzstößel (28) jeweils einen Ventilsitz (29, 30, 31) aufweisen, wobei mindestens einer der Ventilsitze (29, 30, 31) um den zugehörigen Stößel (26, 27, 28) aus einem Kunststoff gespritzt ist.

7. Steuerventil (16) nach einem der vorstehenden Ansprüche, **dadurch gekennzeichnet, dass** mindestens einem der Stößel (26, 27, 28) ein Dichtring (35, 36, 37) innerhalb einer Führungsvorrichtung zugeordnet ist, der ortsfest im Gehäuse (41) angeordnet ist und in dem sich der zugeordnete Stößel (26, 27, 28) bewegt.

8. Steuerventil (16) nach einem der vorstehenden Ansprüche, **dadurch gekennzeichnet, dass** mindestens einer der Stößel (26, 27, 28) eine zugeordnete Führungsvorrichtung im Gehäuse aufweist, die ein Schmiermittelreservoir (38, 39, 40) hat.

9. Fahrzeugsitz mit einem mechanischem Schwingsystem und einer Luftfeder, die zwischen einem ortsfesten Teil und einem dazu in der Höhe variablen Teil angeordnet sind,
und mit einem System zur gewichtsunabhängigen Einstellung der statischen Sitzhöhe,
mit einem Steuerventil (16) nach einen der vorstehenden Patentansprüche, das an einem Teil des mechanischen Schwingsystems angeordnet ist,
und mit einem Bedienelement (18), das an einem anderen, dazu beweglichen Teil des mechanischen Schwingsystems angeordnet ist, und in Kontakt mit dem Steuerventil (16) ist,
wobei das Bedienelement (18) eine Neutralstellung (47) aufweist, in der alle Kanäle des Steuerventils (16) geschlossen sind,
eine Entlüftungsstellung (48) aufweist, in der es das erste Steuermittel (19) bedient und der Entlüftungskanal geöffnet ist,
eine Belüftungsstellung (49) aufweist, in der es das zweite Steuermittel (20) bedient und der Belüftungskanal geöffnet ist,
und eine Zusatzstellung (50) aufweist, in der es das zweite Steuermittel (20) und das dritte Steuermittel (21) bedient und der Belüftungskanal und der Zusatzkanal geöffnet sind.

10. Fahrzeugsitz nach Patentanspruch 9, **dadurch gekennzeichnet, dass** das Steuerventil (16) auf einer Achse (17), drehbar zu dieser, angeordnet ist, die zwei Scherenlenker (10, 11) des mechanischen Schwingsystems drehbar miteinander verbindet und das Bedienelement (18) an einem der Scherenlenker (10; 11) ortsfest angeordnet ist.

11. Fahrzeugsitz nach Patentanspruch 10, **dadurch gekennzeichnet, dass** das Bedienelement (18) ein Mitnehmerzapfen ist, der in seiner Neutralstellung (47) unter Vorspannung gegen eine Auflagefläche (42) des Gehäuses (41) des Steuerventils (16) gedrückt wird.

12. Fahrzeugsitz nach einem der Patentansprüche 10 oder 11, **dadurch gekennzeichnet, dass** der Winkel (α) bezogen auf die Achse zwischen Entlüftungsstellung (48) und Neutralstellung (47) des Bedienelements (18) höchstens 5°, bevorzugt 1,2°, beträgt und/oder der Winkel (α) zwischen Belüftungsstellung (49) und Neutralstellung (47) höchstens 4°, bevorzugt 1,2°, beträgt und/oder der Winkel (α) zwischen Zusatzstellung (50) und Neutralstellung(47) höchstens 7°, bevorzugt 5°, beträgt.

13. Fahrzeugsitz nach einem der Patentansprüche 9 bis 12, **dadurch gekennzeichnet, dass** das Bedienelement (18) mit einem Seilzug zwischen seinen Positionen verstellbar ist und es zur Festlegung der statischen Höhe des Fahrzeugsitzes verwendet wird.

## Claims

1. Control valve (16) for an air spring with a housing (41),
with a vent duct which has a vent tappet (26) for opening or closing the vent duct, which interacts with a first control means (19),
with an air-supply duct which has an air-supply tappet (27) for opening or closing the air-supply duct which interacts with a second control means (20), **characterized by** an additional duct which has an additional tappet (28) for opening or closing the additional duct which interacts with a third control means (21),
wherein a first air connection (A) connects to the vent duct and a second air connection (P) connects to the air-supply duct together with the additional duct,
wherein first control means (19) and second control means (20) are arranged relative to one another in such a manner that they cannot be actuated simultaneously by an operating element (18),
and wherein the second control means (20) and the third control means (21) are arranged relative to one another in such a manner that the additional duct can only be opened when the air-supply duct is opened.

2. Control valve (16) according to claim 1, **characterized in that** the first, the second and the third control means (19, 20, 21) are arranged on the housing (41).

3. Control valve (16) according to claim 2, **characterized in that** the first, the second and the third control means (19, 20, 21) are control levers which rotate in each case about a swivel pin (22, 23, 24) formed on the housing (41).

4. Control valve (16) according to one of the preceding claims, **characterized in that** the vent tappet (26) and/or the air-supply tappet (27) and/or the additional tappet (28) are formed in one piece.

5. Control valve (16) according to one of the preceding claims, **characterized in that** each tappet (26, 27, 28) is pressed info its closed position by one allocated spring (32, 33, 34) in each case.

6. Control valve (16) according to one of the preceding claims, **characterized in that** the vent tappet (26), the air-supply tappet (27) and the additional tappet (28) each have a valve seat (29, 30, 31), wherein at least one of the valve seats (29, 30, 31) is injection-moulded from a plastic around the associated tappet (26, 27, 28).

7. Control valve (16) according to one of the preceding claims, **characterized in that** at least one of the tappets (26, 27, 28) is allocated a stealing ring (35, 36, 37) inside a guiding device, which sealing ring is arranged stationary in the housing (41) and in which the allocated tappet (26, 27, 28) moves.

8. Control valve (16) according to one of the preceding claims, **characterized in that** at least one of the tappets (26, 27, 28) has an allocated guiding device in the housing, which has a lubricant reservoir (38, 39, 40).

9. Motor vehicle seat with a mechanical swing system and an air spring, which are arranged between a stationary part and a part variable in height with respect thereto, and with a system for setting the static seat height independent of weight,
with a control valve (16) according to one of the preceding claims, which is arranged on a part of the mechanical swing system,
and with an operating element (18) which is arranged on another part of the mechanical swing system movable with respect thereto, and is in contact with the control valve (16),
wherein the operating element (18) has a neutral position (47) in which all the ducts of the control valve (16) are closed,
has a vent position (48) in which it operates the first control means (19) and the vent duct is opened,
has an air-supply position (49) in which it operates the second control means (20) and the air-supply duct is opened,
and has an additional position (50) in which it operates the second control means (20) and the third control means (21) and the air-supply duct and the additional duct are opened.

10. Motor vehicle seat according to claim 9, **characterized in that** the control valve (16) is arranged on a spindle (17) rotatable with respect thereto, which connects two scissor control arms (10, 11) of the mechanical swing system rotatably to each other and the operating element (18) is arranged stationary on one of the scissor control arms (10; 11).

11. Motor vehicle seat according to claim 10, **characterized in that** the operating element (18) is a drive pin which in its neutral position (47) is pressed under pretension against a bearing surface (42) of the housing (41) of the control valve (16).

12. Motor vehicle seat according to one of claims 10 or 11, **characterized in that** the angle (α) relative to the spindle between vent position (48) and neutral position (47) of the operating element (18) is at most 5°, preferably 1.2°, and/or the angle (α) between air-supply position (49) and neutral position (47) is at most 4°, preferably 1.2°, and/or the angle (α) between additional position (50) and neutral position (47) is at most 7°, preferably 5°.

13. Motor vehicle seat according to one of claims 9 to 12, **characterized in that** the operating element (18) can be adjusted between its positions with a cable pull and it is used to fix the static height of the motor vehicle seat.

## Revendications

1. Soupape de commande (16) pour un ressort pneumatique avec un carter (41) ;
avec un canal de purge comportant un piston de purge (26) pour l'ouverture ou la fermeture du canal de purge interagissant avec un premier moyen de commande (19) ; avec un canal de ventilation comportant un piston de ventilation (27) pour l'ouverture ou la fermeture du canal de ventilation interagissant avec un deuxième moyen de commande (20) ;
**caractérisée par** un canal supplémentaire comportant un piston supplémentaire (28) pour l'ouverture ou la fermeture du canal supplémentaire interagissant avec un troisième moyen de commande (21), un premier raccord pneumatique (A) étant raccordé au canal de purge et un deuxième raccord pneumatique (P) étant raccordé au canal de ventilation conjointement avec le canal supplémentaire ;
le premier moyen de commande (19) et le deuxième moyen de commande (20) étant disposés de telle sorte l'un par rapport à l'autre qu'ils ne peuvent pas être actionnés simultanément par un élément de commande (18) ;
et le deuxième moyen de commande (20) et le troisième moyen de commande (21) étant disposés de telle sorte l'un par rapport à l'autre que le canal supplémentaire ne peut être ouvert que lorsque le canal de ventilation est ouvert.

2. Soupape de commande (16) selon la revendication 1, **caractérisée en ce que** le premier, le deuxième et le troisième moyen de commande (19, 20, 21) sont disposés au niveau du carter (41).

3. Soupape de commande (16) selon la revendication 2, **caractérisée en ce que** le premier, le deuxième et le troisième moyen de commande (19, 20, 21) sont des leviers de commande tournant respectivement autour d'un tenon pivotant (22, 23, 24) réalisé au niveau du carter (41).

4. Soupape de commande (16) selon l'une quelconque des revendications précédentes, **caractérisée en ce que** le piston de purge (26) et/ou le piston de ventilation (27) et/ou le piston supplémentaire (28) sont réalisés d'un seul tenant.

5. Soupape de commande (16) selon l'une quelconque des revendications précédentes, **caractérisée en ce que** chaque piston (26, 27, 28) est respectivement comprimé dans sa position de fermeture par un ressort (32, 33, 34) associé.

6. Soupape de commande (16) selon l'une quelconque des revendications précédentes, **caractérisée en ce que** le piston de purge (26), le piston de ventilation (27) et le piston supplémentaire (28) comportent respectivement un siège de soupape (29, 30, 31), au moins un des sièges de soupape (29, 30, 31) étant injecté avec une matière plastique autour du piston (26, 27, 28) associé.

7. Soupape de commande (16) selon l'une quelconque des revendications précédentes, **caractérisée en ce qu'**au moins une bague d'étanchéité (35, 36, 37) est associée à un des pistons (26, 27, 28) à l'intérieur d'un dispositif de guidage disposé fixement sur place dans le carter (41) et déplacé dans le piston (26, 27, 28) associé à lui.

8. Soupape de commande (16) selon l'une quelconque des revendications précédentes, **caractérisée en ce qu'**au moins un des pistons (26, 27, 28) comporte un dispositif de guidage associé dans le carter ayant un réservoir de moyen lubrifiant (38, 39, 40).

9. Siège de véhicule avec un système oscillant mécanique et un ressort pneumatique disposés entre une partie fixe sur place et une partie variable par rapport à elle en hauteur ;
et avec un système de réglage indépendant du poids de la hauteur statistique de siège ;
avec une soupape de commande (16) selon l'une quelconque des revendications précédentes, disposée au niveau d'une partie du système oscillant mécanique ;
et avec un élément de commande (18) disposé au niveau d'une autre partie, mobile par rapport à lui, du système oscillant mécanique et en contact avec la soupape de commande (16) ;
l'élément de commande (18) comportant une position neutre (47) dans laquelle tous les canaux de la soupape de commande (16) sont fermés ;
comportant une position de purge (48) dans laquelle il utilise le premier moyen de commande (19) et que le canal de purge est ouvert ;
comportant une position de ventilation (49) dans laquelle il utilise le deuxième moyen de commande (20) et que le canal de ventilation est ouvert ;
et comportant une position supplémentaire (50) dans laquelle il utilise le deuxième moyen de commande (20) et le troisième moyen de commande (21) et le canal de ventilation et le canal supplémentaire sont ouverts.

10. Siège de véhicule selon la revendication 9, **caractérisé en ce que** la soupape de commande (16) est disposée sur un axe (17) de façon à pouvoir tourner par rapport à lui, ledit axe reliant les deux bras cisaillants (10, 11) du système oscillant mécanique de façon à pouvoir les faire tourner entre eux et l'élément de commande (18) étant disposé de façon fixe sur place au niveau d'un bras cisaillant (10 ; 11).

11. Siège de véhicule selon la revendication 10, **caractérisé en ce que** l'élément de commande (18) est un doigt d'entraînement comprimé dans sa position neutre (47) sous précontrainte contre une surface d'appui (42) du carter (41) de la soupape de commande (16).

12. Siège de véhicule selon l'une quelconque des revendications 10 ou 11, **caractérisé en ce que** l'angle (α) est de tout au plus 5°, de façon préférée 1,2°, par rapport à l'axe entre la position de purge (48) et la position neutre (47) de l'élément de commande (18) et/ou que l'angle (α) est de tout au plus 4°, de façon préférée 1,2°, entre la position de ventilation (49) et la position neutre (47) et/ou que l'angle (α) est de tout au plus 7°, de façon préférée 5°, entre la position supplémentaire (50) et la position neutre (47).

13. Siège de véhicule selon l'une quelconque des revendications 9 à 12, **caractérisé en ce que** l'élément de commande (18) peut être réglé avec une traction de câble entre ses positions et est utilisé pour déterminer la hauteur statique du siège de véhicule.
